# EUROPÄISCHE PATENTANMELDUNG

(11) **EP 2 832 198 A1**
(43) Veröffentlichungstag der Anmeldung: **04.02.2015**
(21) Anmeldenummer: 14401082.4
(22) Anmeldetag: 29.07.2014
(51) Int. Cl.: A01B 29/00, A01B 29/06

(54) **Bodenwalzeneinheit**

(30) Priorität: 31.07.2013 DE 102013108192
(71) Anmelder: Amazonen-Werke H. Dreyer GmbH & Co. KG, 49205 Hasbergen (DE)
(72) Erfinder: Markow, Alexander, 04178 Leipzig (DE)

(57) **Zusammenfassung**

Bodenwalzeneinheit mit zumindest zwei hintereinander angeordneten und auf dem Boden abrollenden Nachlaufwalzen, von denen eine als Hauptwalze und die zumindest eine weitere als Nebenwalze ausgebildet sind, wobei die Hauptwalze in einem Haupttragrahmen drehbar angeordnet und die zumindest eine weitere Nebenwalze in einem Zusatzrahmen drehbar angeordnet ist, wobei der Zusatzrahmen an dem Haupttragrahmen mittels Verbindungselementen angeordnet ist. Um eine verbesserte Tiefenführung für Tandemwalzen zu schaffen, ist vorgesehen, dass die Verbindungselemente als zumindest einen Gelenkbolzen aufweisende Gelenkelemente ausgebildet sind, so das Haupttragrahmen und Zusatzrahmen in einem begrenztem Umfang zueinander bewegbar angeordnet sind, dass zwischen dem Haupttragrahmen und dem Zusatzrahmen die Nebenwalze in Richtung der Hauptwalze und der Bodenaufstandsfläche belastende Federelemente angeordnet sind.

## Beschreibung

Die Erfindung betrifft eine Bodenwalzeneinheit gemäß des Oberbegriffes des Patentanspruches 1.

Eine derartige Bodenwalzeneinheit ist in der DE 27 49 148 A1 beschrieben. Diese Bodenwalzeneinheit ist als Nachlaufwalzeneinheit hinter einer Kreiselegge angeordnet und weist zwei hintereinander angeordnete und auf dem Boden abrollende Nachlaufwalzen auf. Die eine Walze ist als Hauptwalze und die weitere Walze ist als Nebenwalze ausgebildet. Die Hauptwalze ist in einem Haupttragrahmen drehbar angeordnet, während die Nebenwalze in einem Zusatzrahmen drehbar angeordnet ist. Der Zusatzrahmen ist an dem Haupttragrahmen mittels Verbindungselementen frei bewegbar angeordnet ist. Durch die frei bewegbare Anordnung der Nebenwalze gegenüber der Hauptwalze kann die Nebenwalze keinen Stützkräfte und keine Führungsfunktion gegenüber dem vorlaufendem Bodenbearbeitungsgerät übernehmen.

Durch die DE 35 41 543 C2, DE 20 2009 010 188 U1 und DE 92 14 872 U1 sind jeweils Bodenwalzeneinheiten bekannt, die eine vorlaufende Haupt- und eine nachlaufende Nebenwalze aufweisen. Bei allen Bodenwalzeneinheiten sind die Haupt- und die Nebenwalze an einem Quersteg drehbar gelagert. Der Quersteg ist mittels eines Gelenkes an dem Tragrahmen, der mit dem vorlaufendem Bodenbearbeitungsgerät verbunden ist, verschwenkbar aufgehängt. Hierdurch können Haupt- und Nebenwalze frei um die Gelenkachse der Gelenke, mit denen der Quersteg annehmen Tragrahmen angeordnet ist, zueinander verschwenken. Hierdurch ist keine definierte Tiefenführung des vorlaufenden Bodenbearbeitungsgerätes und keine definierte Belastung der Hauptwalze gewährleistet. Derartige Walzen werden auch als Tandemwalzen bezeichnet.

Der Erfindung liegt die Aufgabe zu Grunde, eine verbesserte Tiefenführung für Tandemwalzen zu schaffen.

Diese Aufgabe wird erfindungsgemäß dadurch gelöst, dass die Verbindungselemente als zumindest einen Gelenkbolzen aufweisende Gelenkelemente ausgebildet sind, so das Haupttragrahmen und Zusatzrahmen in einem begrenztem Umfang zueinander bewegbar angeordnet sind, dass zwischen dem Haupttragrahmen und dem Zusatzrahmen die Nebenwalze in Richtung der Hauptwalze und der Bodenaufstandsfläche belastende Federelemente angeordnet sind.

Infolge dieser Maßnahmen ist die von jeder Walze zu übernehmende Traglast entsprechend genau zu bestimmen. Aufgrund der Federung ist die nachlaufende Walze gegenüber der vorlaufenden Walze in federnder Weise bewegbar und kann sich so dynamisch den Einsatzbedingungen anpassen. Die vorlaufende Hauptwalze ist quasi in einem starren Rahmen montiert und zum größten Teil für die Tiefenführung des vorlaufende Bodenbearbeitungsgerätes verantwortlich. Die nachlaufende und in dem Zusatzrahmen angeordnete Nebenwalze ist gegenüber der Hauptwalze beweglich angeordnet und übernimmt durch die Federn nur einen Teil der Abstützlast für das Bodenbearbeitungsgerät und die Tiefenführung. Sie bestimmt jedoch das endgültige Arbeitsergebnis des Bodenbearbeitungsgerätes bzw. der Bodenwalzeneinheit. Aufgrund der Federnanordnung der Nebenwalze gegenüber der Hauptwalze kann die Nebenwalze bei dem Überlaufen von aus dem Boden herausragenden Hindernissen nach oben ausweichen, ohne noch einmal das Bodenbearbeitungsgerät anzuheben.

Bei einer Bodenwalzeneinheit, bei der der Haupttragrahmen zumindest einen Querträger aufweist, ist vorgesehen, dass an dem Querträger Gelenklaschen der der Gelenkelemente angeordnet sind, dass die Federelemente oberhalb und/oder neben dem jeweiligen Gelenkbolzen angeordnet sind. Hierdurch ergibt sich eine einfache und geschützte Anordnung der Federelemente.

Um eine gute Zusammenarbeit der Hauptwalze und der Zusatzwalze sowie ein gutes Arbeitsergebnis zu erhalten, ist vorgesehen, dass der Schwenkbereich der beiden Walzen zueinander durch Anschlagelemente begrenzbar ist.

Damit die auf die beiden Walzen einwirkende Lastverteilung in einfacher Weise einstellbar und an die jeweiligen Arbeitsbedingungen anpassbar ist, ist vorgesehen, dass die wirksame Federkraft der Federelemente mittels geeigneter Einstellmittel einstellbar ist.

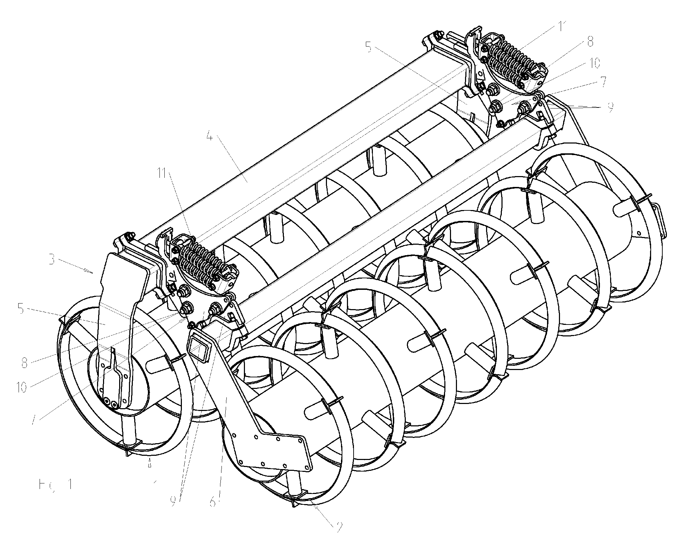

Weitere Einzelheiten der Erfindung sind der Beispielsbeschreibung zu entnehmen. Die Zeichnungen zeigen
- Fig.1: die Bodenwalzeneinheit in perspektivischer Darstellung von schräg hinten - oben sowie in Prinzipdarstellung,

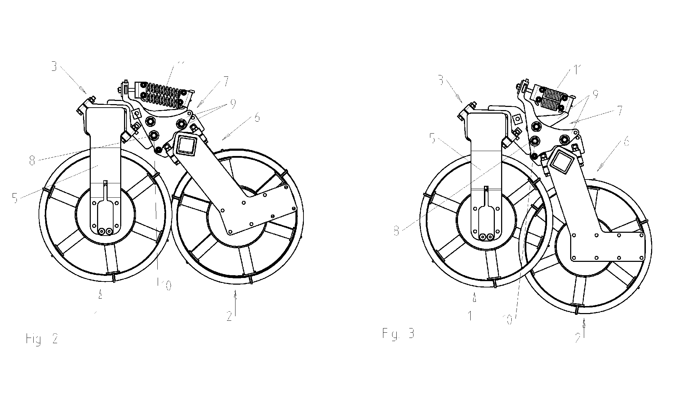

- Fig.2: die Bodenwalzeneinheit in Seitenansicht und dem Prinzipdarstellung,
- Fig.3: die Bodenwalzeneinheit in Seitenansicht und dem Prinzipdarstellung, wobei die Nebenwalze in der tiefst möglichsten Stellung gegenüber der Hauptwalze dargestellt ist und

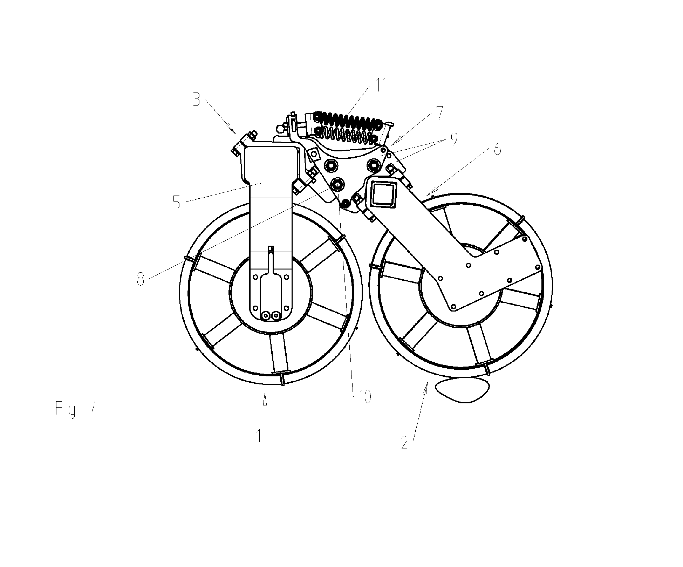

- Fig.4: die Bodenwalzeneinheit in Seitenansicht und dem Prinzipdarstellung, wobei die Nebenwalze beim Überrollen angehoben gegenüber der Hauptwalze dargestellt ist.

Die Bodenwalzeneinheit weist die vorlaufende Hauptwalze 1 und die nachlaufende Nebenwalze 2 auf. Die Hauptwalze 1 ist in einem Haupttragrahmen 3 angeordnet. Dieser Haupttragrahmen 3 weist den Querträger 4 mit den beiden seitlich nach unten ragenden Haltestegen 5 auf. An diesen Haltestegen 5 ist die Hauptwalze 1 mittels geeigneter Lagerelemente drehbar gelagert. Die nachlaufende Nebenwalze 2 ist an den Zusatzrahmen 6 mittels geeigneter Lagerelemente drehbar angeordnet. Über die Gelenkelemente 7, die jeweils einen Gelenkbolzen 8 aufweisen, aufweisenden Verbindungselemente 9 zwischen dem Haupt- 3 und Zusatzrahmen 4 sind der Hauptrahmen 3 mit der Hauptwalze 1 und der Zusatzrahmen 4 mit der Nebenwalze 2 um die Gelenksachse 10 der Gelenkelemente 7 in begrenzten Umfang zueinander bewegbar angeordnet.

Die Gelenkelemente 7 weisen Gelenklaschen auf, die in dem Querträger 4 angeordnet sind.

In nicht dargestellter Weise ist die Bodenwalzeneinheit in bekannter Weise über Tragarme an eine nicht dargestellte vorlaufende Bodenbearbeitungsgerät oder Bodenbearbeitungsgerät angeordnet. Die Hauptwalze 1 und in die Nebenwalze 2 der Bodenwalzeneinheit führen das vorlaufende Bodenbearbeitungsgerät oder die vorlaufende Bodenbearbeitungsmaschine in der Tiefe und drücken den gelockerten Boden wieder an.

Den Verbindungselementen 9 sind in geeigneter Weise, wie den Zeichnungen zu entnehmen ist, die Nebenwalze 2 in Richtung der Hauptwalze 1 und der Bodenaufstandsfläche belastende Federelemente 11 angeordnet. Die Federelemente 11 sind oberhalb des jeweiligen Gelenkbolzens 8 angeordnet, wie die Zeichnungen zeigen. Die Federelemente 11 können beispielsweise als Druckfedern, Zugfedern, Tellerfedern, Gummifedern, etc. ausgebildet sein.

Mittels nicht dargestellter Anschlagelemente kann der Schwenkbereich der beiden Walzen 1, 2 zueinander begrenzt werden. Weiterhin kann in nicht dargestellter Weise die wirksame Federkraft der Federelemente 11 mittels nicht dargestellter Einstellmittel einstellbar sein.

Weiterhin kann, in nicht dargestellter Weise zwischen den beiden Walzen 1, 2 fest Stellelemente angeordnet sein, um die beiden Walzen 1, 2 in einer gewünschten Position starr zueinander zu fixieren.

## Patentansprüche

1. Bodenwalzeneinheit mit zumindest zwei hintereinander angeordneten und auf dem Boden abrollenden Nachlaufwalzen, von denen eine als Hauptwalze (1) und die zumindest eine weitere als Nebenwalze (2) ausgebildet sind, wobei die Hauptwalze in einem Haupttragrahmen (3) drehbar angeordnet und die zumindest eine weitere Nebenwalze (1) in einem Zusatzrahmen (6) drehbar angeordnet ist, wobei der Zusatzrahmen (2) an dem Haupttragrahmen (4) mittels Verbindungselementen (9) angeordnet ist, **dadurch gekennzeichnet, dass** die Verbindungselemente (9) als zumindest einen Gelenkbolzen (8) aufweisende Gelenkelemente (7) ausgebildet sind, so das Haupttragrahmen (3) und Zusatzrahmen (6) in einem begrenztem Umfang zueinander bewegbar angeordnet sind, dass zwischen dem Haupttragrahmen (3) und dem Zusatzrahmen (6) die Nebenwalze (2) in Richtung der Hauptwalze (1) und der Bodenaufstandsfläche belastende Federelemente (11) angeordnet sind.

2. Bodenwalzeneinheit nach Anspruch 1, wobei der Haupttragrahmen (3) zumindest einen Querträger (4) aufweist, **dadurch gekennzeichnet, dass** an dem Querträger (4) Gelenklaschen der der Gelenkelemente (7) angeordnet sind, dass die Federelemente (11) oberhalb und/oder neben dem jeweiligen Gelenkbolzen (8) angeordnet sind.

3. Bodenwalzeneinheit nach zumindest einem der vorstehenden Ansprüche, **dadurch gekennzeichnet, dass** der Schwenkbereich der beiden Walzen (1, 2) zueinander durch Anschlagelemente begrenzbar ist.

4. Bodenwalzeneinheit nach zumindest einem der vorstehenden Ansprüche, **dadurch gekennzeichnet, dass** die wirksame Federkraft der Federelemente (11) mittels geeigneter Einstellmittel einstellbar ist.
